(19) Europäisches Patentamt / European Patent Office / Office européen des brevets

(11) **EP 4 293 745 A1**

(12) **EUROPEAN PATENT APPLICATION**

(43) Date of publication:
**20.12.2023 Bulletin 2023/51**

(21) Application number: **23177304.5**

(22) Date of filing: **05.06.2023**

(51) International Patent Classification (IPC):
**H01M 4/134** (2010.01)   **H01M 4/1395** (2010.01)
**H01M 4/36** (2006.01)   **H01M 4/38** (2006.01)
**H01M 10/0525** (2010.01)   **H01M 4/02** (2006.01)

(52) Cooperative Patent Classification (CPC):
**H01M 4/134; H01M 4/1395; H01M 4/362;
H01M 4/366; H01M 4/386; H01M 10/0525;**
H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.06.2022   CN 202210690849**

(71) Applicants:
• **Hon Hai Precision Industry Co., Ltd.**
**New Taipei City (TW)**
• **SolidEdge Solution Inc.**
**Hsinchu 300 (TW)**

(72) Inventors:
• **CHEN, MAO-SUNG**
**300 Hsinchu (TW)**
• **CHEN, WEI-LUN**
**300 Hsinchu (TW)**
• **LAI, HONG-ZHENG**
**300 Hsinchu (TW)**
• **CHANG, TSENG-LUNG**
**300 Hsinchu (TW)**

(74) Representative: **Zaboliene, Reda**
**Metida**
**Business center Vertas**
**Gyneju str. 16**
**01109 Vilnius (LT)**

(54) **SILICON-CARBON PRE-LITHIUM COMPOSITE ANODE MATERIAL AND METHOD FOR MAKING THE SAME AND BATTERY**

(57)   The present application provides a method of making a silicon-carbon pre-lithium composite anode material. The method includes: nanoizing silicon materials to obtain nano-silicon particles, adding carbon materials and polymer into the nano-silicon particles for homogenization treatment to obtain a silicon-carbon composite; providing a pre-lithium nanomaterial; mixing the silicon-carbon composite and the pre-lithium nanomaterial to granulate to obtain a silicon-carbon pre-lithium composite precursor; and sintering the silicon-carbon pre-lithium composite precursor.

EP 4 293 745 A1

**Description**

CROSS-REFERENCE TO RELATED APPLICATIONS

This application claims all benefits from the Chinese Patent Application No. 202210690849.0, filed on June 17, 2022, in the China National Intellectual Property Administration, the disclosure of which is incorporated herein by reference.

**BACKGROUND**

**1. Technical Field**

The present application relates to a silicon-carbon pre-lithium composite anode material and a method for making the silicon-carbon pre-lithium composite anode material.

**2. Discussion of Related Art**

Currently, pre-lithium processing of lithium-ion batteries is an important method to improve energy density and cycle life of the batteries. The pre-lithium processing is divided into making cathode electrode pre-lithium and anode electrode pre-lithium. The cathode electrode pre-lithium is made by adding lithium-rich oxides to the cathode electrode to supplement the lithium source loss during a first activation process. The anode electrode pre-lithium is made by inserting lithium ions into the anode electrode active material by pressing a lithium source such as a lithium metal thin film on the surface of the anode electrode active material layer. Although such processing can improve the lifetime by reducing the initial irreversibility of the silicon-based anode electrode active material, the above described process also generates a number of byproducts during the pre-lithiation of the lithium source to the silicon-based anode electrode active material. However, lithium oxide with low conductivity is produced mostly on the surface of silicon-based anode active materials, so this method has a limit to reduce the irreversibility.

The pre-lithium method in the prior art can only realize one-time replenishment of the anode electrode in the first activation to improve the loss of active lithium caused by the first charge. However, after the one-time replenishment pre-lithium processing, most of the pre-lithium materials exists in the battery in the form of an inert substance, which reduces the overall energy density and power density. Therefore, the one-time replenishment pre-lithium method cannot effectively replenish the lithium loss caused by the charge-discharge cycles during the continuous use of the lithium-ion battery, and cannot achieve the effect of continuous replenishment during the cycles. The current solutions are mainly to pre-store a part of the lithium source on the anode electrode, but the solutions may have a great risk of thermal runaway during the first charging process. At the same time, due to the volume expansion of the silicon-based anode electrode active material during the charge and discharge process, solid electrolyte interfaces are repeatedly formed, and the amount of lithium in the battery system will also be consumed.

Therefore, there is room for improvement in the art.

**BRIEF DESCRIPTION OF THE DRAWINGS**

In order to illustrate the technical solutions of the embodiments of the present application more clearly, the accompanying drawings in the embodiments will be briefly introduced below. It should be understood that the following drawings only show some embodiments of the present application, and therefore should not be seen as the limiting the scope. For one of ordinary skill in the art, other related drawings can also be obtained from these drawings without any creative work.

Implementations of the present technology will now be described, by way of embodiments, with reference to the attached figures, wherein:

FIG. 1 shows a granulation schematic diagram of silicon-carbon composite and pre-lithium nanomaterial according to an embodiment of the present disclosure.
FIG. 2 shows a structural diagram of silicon-carbon pre-lithium composite anode electrode material according to an embodiment of the present disclosure.
FIG. 3 shows an X-ray diffraction pattern of the silicon-carbon pre-lithium composite anode electrode material and elemental silicon.
FIG. 4 shows a scanning electron microscope image of the silicon-carbon pre-lithium composite anode electrode material.

**DETAILED DESCRIPTION OF EXEMPLARY EMBODIMENTS**

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. The drawings are not necessarily to scale, and the proportions of certain parts may be exaggerated better illustrate details and features. The description is not to be considered as limiting the scope of the embodiments described herein.

The term "outside" refers to a region that is beyond the outermost confines of a physical object. The term "inside" indicates that at least a portion of a region is partially contained within a boundary formed by the object. The term "substantially" is defined to essentially conforming to the particular dimension, shape or other word that substantially modifies, such that the component need not be exact. For example, substantially cylindrical means that the object resembles a cylinder, but can have one or more deviations from a true cylinder. The term "comprising" means "including, but not necessarily limited to"; it specifically indicates open-ended inclusion or membership in a so-described combination, group, series and the like. It should be noted that references to "an" or "one" embodiment in this disclosure are not necessarily to the same embodiment, and such references mean at least one.

A first embodiment of a method of making a silicon-carbon pre-lithium composite anode material comprises:

S1, nanoizing silicon materials to obtain nano-silicon particles, adding carbon materials and polymer into the nano-silicon particles for homogenization treatment to obtain a silicon-carbon composite;

S2, providing a pre-lithium nanomaterial;

S3, mixing the silicon-carbon composite and the pre-lithium nanomaterial to granulate to obtain a silicon-carbon pre-lithium composite precursor;

S4, sintering the silicon-carbon pre-lithium composite precursor to obtain the silicon-carbon pre-lithium composite anode material, wherein the sintering temperature is 500 Celsius degrees ~ 1200 Celsius degrees.

The numbering of the steps S1-S4 is only for the convenience of the following description, and the order of the steps is not limited. In addition, between each step, other steps may also be included as required.

In step S1, the silicon material can be a semiconductor-grade silicon material, and the size of the silicon material can be selected from a micron level, such as greater than or equal to 10 microns. The realization of nanonization process can include mechanical processing, mechanical ball milling, etc. Mechanical ball milling can be dry milling or wet milling.

The nanonization process is carried out in a protective environment. The protective environment may be a vacuum environment, or the protective environment may be obtained by passing an inert gas or adding a solvent. The inert gas includes at least one of argon (Ar), nitrogen ($N_2$) or helium (He). The inert gas can provide an oxygen-free environment to prevent the nano-silicon particles from being oxidized, so that the silicon-carbon pre-lithium composite anode electrode material prepared subsequently is basically free of SiOx, which is beneficial to improve the electrochemical performance of the silicon-carbon pre-lithium composite anode electrode material and reduce the volume effect. The solvent can be diethylene glycol (DEG), polyethylene glycol (PEG), propylene glycol (PG), dimethylsulfoxide (DMSO) or a combination thereof. The solvent can prevent nano-silicon from being oxidized, so that the silicon-carbon pre-lithium composite anode electrode material is basically free of SiOx, which is beneficial to improve the electrochemical performance of the silicon-carbon pre-lithium composite anode electrode material and reduce the volume effect. The size of the nano-silicon particles is 10 nanometers to 50 nanometers. The nano-silicon particles is conducive to the homogenization treatment of carbon materials to obtain the silicon-carbon pre-lithium composite anode electrode materials with suitable particle sizes.

The polymer is an amphoteric polymer and has a hydrophobic group and a hydrophilic group. The polymer can be N-allyl-(2-ethylxanthate) propionamide (NAPA), dimethylformamide (DMF) or a combination thereof. The polymer is a medium containing, for example, amino groups, hydroxyl groups, etc. The polymer has a hydrophilic group at one end and a hydrophobic group at the other end, which can improve the difference in hydrophilicity and hydrophobicity between nano-silicon and carbon materials. In one embodiment, one end of the polymer having a hydrophilic group is bonded to the nano-silicon, and the other end having a hydrophobic group is bonded to the carbon materials, so that the nano-silicon is firmly coated on the carbon materials and is not easy to agglomerate with other nano-silicon.

The carbon materials can be pitch, graphite, graphene, carbon black, carbon nanotubes, nanofibers and the like. During the homogenization treatment of the carbon materials, the particles escape phenomenon triggers exothermic reaction. The carbon materials can perform thermal diffusion, avoid agglomeration, and prevent nano-silicon from being oxidized due to exothermic phenomena.

The homogenization treatment can be mechanical processing, electrical discharge machining, or mechanical ball milling. The mechanical ball milling can be dry milling or wet milling. The homogenization treatment enables nano-silicon, polymer and carbon materials to complete orderly stack self-assembly coating, and obtain a layered silicon-carbon composite.

In step S2, the pre-lithium nanomaterial (LiyM) can be $Li_5B_4$, $Li_{22}Si_5$, $Li_{22}Sn_5$, $Li_{22}Ge_5$ , $Li_3N$ , $Li_2O$ , LiF , LiCl , LiI , $Li_2S$ , $Li_3PO_4$ , $LiAlO_2$ , $Li_2TiO_3$, etc. In one embodiment, the pre-lithium nanomaterial is $Li_3N$. Furthermore, the pre-lithium nanomaterial can be synthesized by mixing lithium raw materials and active substances. The lithium raw materials can be at least one of lithium oxide ($Li_2O$), lithium powder, lithium hydroxide (LiOH), lithium nitrate ($LiNO_3$), lithium carbonate ($LiCO_3$), etc. The active substances can be at least one of B, Si, Ge, Sn, N, O, F, Cl, I, S, P, $AlO_2$, $TiO_2$. The pre-lithium nanomaterials can be obtained according to the type of the active materials.

The synthesis reaction of the lithium raw material and the active substance needs to be carried out in a sealed environment. Furthermore, nitrogen or argon can also be passed into the sealed environment for internal circulation for heat dissipation. In one embodiment, the synthesis reaction is achieved by grinding the lithium raw material and the active substance in a sealed environment. The particle size of the pre-lithium nanomaterial obtained through grinding is a nanoscale particle size. The particle size of the pre-lithium nanomaterial is smaller than the particle size of the silicon-carbon composite, so that the pre-lithium nanomaterial can be easily coated on the silicon-carbon composite during the granulation process. Furthermore, a solvent can be added during the grinding process for heat dissipation. The solvent can be an alkane solvent such as hexane, heptane, octane or the like. The solvent can be removed by vacuum drying after the grinding process.

In step S3, the silicon-carbon composite and pre-lithium nanomaterials are uniformly mixed and granulated to prepare solid spheres to prepare solid spheres that can be used for subsequent pulping. In one embodiment, the mass ratio of the pre-lithium nanomaterial to the silicon-carbon composite is 1%-5%.

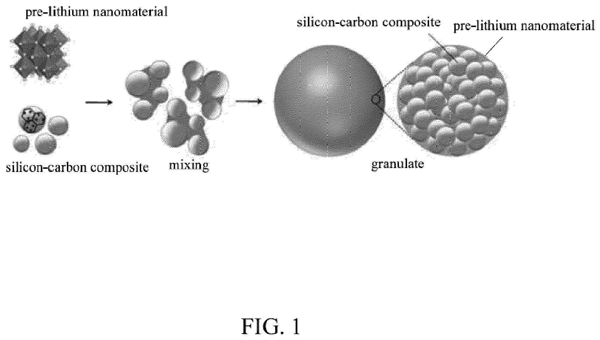

The granulation process includes but not limited to two-fluid granulation, four-fluid granulation, cyclone granulation, spray granulation, dry granulation or wet granulation. Referring to figure 1, after uniformly mixing the silicon-carbon composite and the pre-lithium nanomaterial, the pre-lithium nanomaterial forms a stable film layer on the surface of the silicon-carbon composite through a granulation process. The film layer formed by the pre-lithium nanomaterial is coated on the surface of the silicon-carbon composite to form a uniform solid spherical structure, thereby obtaining a silicon-carbon pre-lithium composite precursor. In the granulation process, granulation conditions such as granulation temperature and pressure difference can be adjusted and controlled to prevent the pre-lithium nanomaterial from dissipating during the granulation process.

After the granulation process, the particle size of the silicon-carbon pre-lithium composite precursor is 5 microns to 15 microns, which is suitable for the pulping process of lithium secondary batteries, and can also avoid agglomeration in the subsequent sintering process.

In step S4, the sintering process can be carried out under a protective atmosphere or a low vacuum environment to increase the compactness and integrity of the pre-lithium nanomaterial as a cladding layer. The protective atmosphere can be a nitrogen-hydrogen mixed atmosphere. The sintering temperature is 500 Celsius degrees ~ 1200 Celsius degrees.

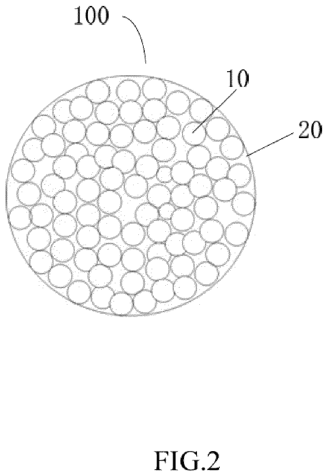

A second embodiment of a silicon-carbon pre-lithium composite anode material is provided. Referring to figure 2, the silicon-carbon pre-lithium composite anode electrode material 100 includes a silicon-carbon composite 10 and a pre-lithium nanolayer 20 covering the silicon-carbon composite 10. The silicon-carbon composite 10 is a composite structure formed by nano-silicon, polymer and carbon materials. The nano-silicon is bonded on the carbon materials through the polymer, so that the nano-silicon is firmly coated on the carbon materials, and at the same time, the agglomeration between the nano-silicon particles is prevented. The pre-lithium nanolayer 20 includes one or more lithium-containing compound LiyM. Here, M represents a substance, such as at least one of B, Si, Ge, Sn, N, O, F, Cl, I, S, P, $AlO_2$, $TiO_2$. The lithium-containing compound LiyM can be $Li_5B_4$, $Li_{22}Si_5$, $Li_{22}Sn_5$, $Li_{22}Ge_5$ , $Li_3N$ , $Li_2O$ , LiF , LiCl , LiI , $Li_2S$ , $Li_3PO_4$ , $LiAlO_2$ , $Li_2TiO_3$, etc. The pre-lithium nanolayer 20 can form a stable solid electrolyte interface (SEI) film on the surface of the silicon-carbon composite, and can replenish lithium sources during the battery cycle. The M in the lithium-containing compound LiyM is a reserved vacancy for lithium intercalation, and can also provide the buffer space for the volume expansion of the silicon material, thereby greatly improving the cycle performance of the anode electrode material. At the same time, since the nano-silicon is used in the silicon-carbon pre-lithium composite anode electrode material 100, the stress effect caused by lithium intercalation into silicon for the first time can be effectively reduce after nanoizing silicon.

A third embodiment of a battery is provided. The battery includes a positive pole piece, a negative pole piece and a separator, and the negative pole piece comprises the silicon-carbon pre-lithium composite anode electrode material. The battery can be a secondary battery, such as a lithium-ion secondary battery, a sodium-ion battery, etc., but the battery is not limited thereto.

The method of making the silicon-carbon pre-lithium composite anode electrode material provided by the application is to obtain a composite structure formed by the pre-lithium nanomaterial coated on the silicon-carbon composite. And the composite structure is obtained by adopting the steps of mixing the silicon-carbon composite and the pre-lithium nanomaterials homogeneously and by granulation and sintering. The pre-lithium nanomaterials can form a stable SEI film and provide a buffer space for the volume expansion of silicon materials. At the same time, the pre-lithium nanomaterials can also be used as a lithium-rich phase for lithium source replenishment, so that the cycle performance of the silicon-carbon pre-lithium composite anode electrode material can be greatly improved. The silicon-carbon pre-lithium composite anode electrode material provided in this application has a high specific capacity (>1600 mAh g-1), and the Faraday efficiency of the half-cell formed by the silicon-carbon pre-lithium composite anode electrode material can reach more than 90%, and the half-cell can have high cycle stability.

The present application can be further described below in conjunction with specific embodiments.

Example 1

S1, putting semiconductor grade silicon material (≥10μm), diethylene glycol and 5wt% polymer N-allyl-(2-ethylxanthyl) propionamide into a grinder for mechanical processing, wherein the rotating speed of a grinder is 2400-3000 rpm, the silicon material is processed into nano-silicon, and the grain size of the nano-silicon is 15-50 nanometers. Then a carbon material containing 10 wt% flake natural graphite was added, and nano-silicon is composited on the surface of the carbon material through an ordered stacking self-assembly process to obtain a silicon-carbon composite.

S2, putting $Li_2O$ and B powders in the atomic ratio of LiyB in an argon-sealed environment for grinding and taking out after grinding for 24 hours to carry out vacuum drying to obtain the pre-lithium nanomaterials; wherein an octane can be added as heat-dissipating solvent during grinding, and the speed of grinding is 2400-3000 rpm.

S3, mixing and homogenizing the silicon-carbon composite and one percent pre-lithium nanomaterials, and then co-granulating to obtain the silicon-carbon pre-lithium composite precursors. S4, putting the silicon-carbon pre-lithium composite precursor into a sintering furnace containing nitrogen-hydrogen mixed gas to obtain a silicon-carbon pre-lithium composite anode electrode material, wherein the gas flow rate is 2 L/min, and the temperature is 550 Celsius degrees for heat treatment for 8 hours.

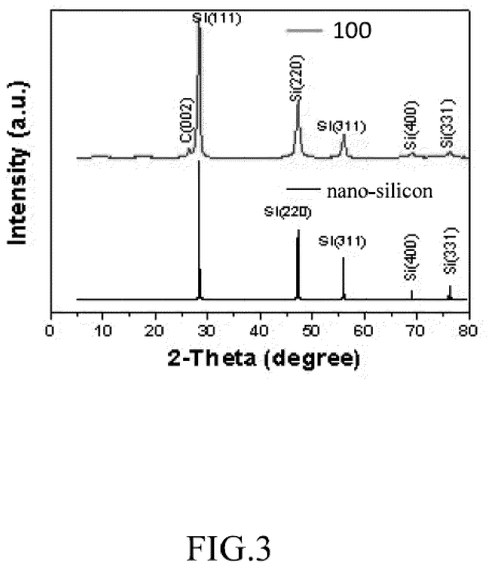

Referring to Fig. 3, from the comparison of XRD diagrams of the silicon-carbon pre-lithium composite anode electrode material prepared in Example 1 and the elemental silicon, it can be seen that the characteristic peaks of silicon in the silicon-carbon pre-lithium composite anode electrode material are the same as those of elemental silicon, and there are no characteristic peaks of silicon oxide.

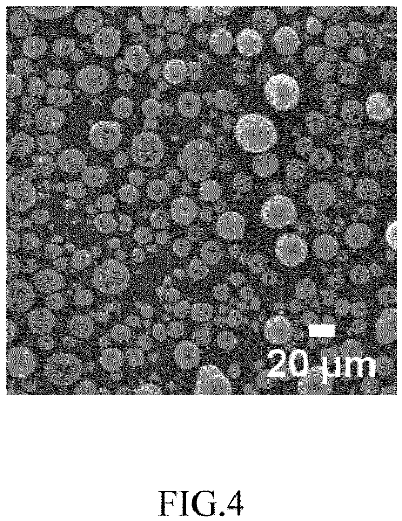

Figure 4 shows a scanning electron micrograph of the silicon-carbon pre-lithium composite anode electrode material prepared in example 1. The particle surface of the silicon-carbon pre-lithium composite anode electrode material prepared in Example 1 is smooth and the coating is tight, and the specific surface area of the particles can be effectively controlled. This shows that particles with suitable size can be obtained and the surface of the particles is protected by pre-lithium nanomaterials by the homogeneous, grinding, granulation process of the present application.

The silicon-carbon pre-lithium composite anode electrode material with the pre-lithium nanomaterials of LiyB is marked as sample 1. A silicon-carbon pre-lithium composite anode electrode material with the pre-lithium nanomaterials of LiySi is marked as sample 2. A silicon-carbon pre-lithium composite anode electrode material with the pre-lithium nanomaterials of LiyN is marked as sample 3. A silicon-carbon anode electrode material without a pre-lithium nanomaterial is marked as sample 4. Each sample, conductive agent and binder are dissolved in water at a mass ratio of 88:1:11 to obtain a mixture, and the mixture is a slurry with a solid content of 50%. The slurry is coated on a copper foil current collector and dried in vacuum to obtain a negative electrode sheet. A ternary positive pole piece, lithium salt electrolyte, and Celgard 2400 diaphragm by conventional production process for pouch battery stacking. The lithium salt electrolyte is the combination of $LiPF_6$/EC, DMC, EMC. The battery assembled from sample 1 is marked as battery 1, the battery assembled from sample 2 is marked as battery 2, the battery assembled from sample 3 is marked as battery 3, and the battery assembled from sample 4 is marked as battery 4. Battery 1, battery 2, battery 3 and battery 4 are subjected to the following performance tests respectively.

A test of the negative electrode lithium ion extraction capacity is provided. The current density is 0.1C, the voltage drops to 2.0V. The extraction capacity is obtained by converting the negative electrode gram capacity according to a following formula.

$$Q(mAh \cdot g^{-1}) = \frac{rated\ capacity\ (mAh)}{coating\ weight\ per\ unit\ area\left(\frac{g}{cm^2}\right) \cdot collector\ area\ (cm^2)}$$

The above performance test results are shown in table 1.

| | pre-lithium nanomaterial | content percent | Faraday first effect | extraction capacity | retention rate (@ 100 cycles) |
|---|---|---|---|---|---|
| Battery 1 | $Li_yB$ | 1% | 88.2% | 1672 | 92.3% |
| Battery 2 | $Li_ySi$ | 1% | 89.6% | 1700 | 93.8% |
| Battery 3 | $Li_yN$ | 1% | 87.7% | 1653 | 89.4% |
| Battery 4 | -- | 0% | 84.5% | 1595 | 63.5% |

As can be seen from Table 1, the battery assembled by the silicon-carbon pre-lithium composite anode electrode material of the present application has significantly higher extraction capacity and extraction capacity retention than the battery without pre-lithium nanomaterial. It shows that the silicon-carbon pre-lithium composite anode electrode material containing pre-lithium nanomaterial of the present application improves the conductivity and cycle stability of the battery.

Since the pre-lithium nanomaterial LiyM can form a stable SEI film on the surface of the silicon-carbon composite, and the pre-lithium nanomaterial LiyM can replenish the lithium source during the battery cycle and can also provide the buffer space for the volume expansion of silicon materials, the cycle performance of the silicon-carbon pre-lithium composite anode material is greatly improved. At the same time, M can be used as a reserved vacancy for lithium intercalation, and it can be used as a buffer when the volume of the silicon-carbon pre-lithium composite anode electrode changes. The method of making the silicon-carbon pre-lithium composite anode electrode material of the present application is simple in process. And the method is easy to control the process, and suitable for industrial production.

The embodiments shown and described above are only examples. Even though numerous characteristics and advantages of the present technology have been set forth in the foregoing description, together with details of the structure and function of the present disclosure, the disclosure is illustrative only, and changes may be made in the detail, including in matters of shape, size and arrangement of the parts within the principles of the present disclosure up to, and including, the full extent established by the broad general meaning of the terms used in the claims.

The above embodiments are only used to illustrate the technical solutions of the present application rather than limitations. Although the present application has been described in detail with reference to the above preferred embodiments, one of ordinary skill in the art should understand that the technical solutions of the present application may be modified or equivalently replaced without departing from the spirit and scope of the technical solutions of the present application.

**Claims**

1.   A method of making silicon-carbon pre-lithium composite anode material, comprises:

nanoizing silicon materials to obtain nano-silicon particles, adding carbon materials and polymer into the nano-silicon particles for homogenization treatment to obtain a silicon-carbon composite;
providing a pre-lithium nanomaterial;
mixing the silicon-carbon composite and the pre-lithium nanomaterial;
granulating the silicon-carbon composite and the pre-lithium nanomaterial to obtain a silicon-carbon pre-lithium composite precursor; and
sintering the silicon-carbon pre-lithium composite precursor.

2.   The method of claim 1, wherein the step of nanoizing the silicon materials is carried out in a protective environment, the protective environment comprises a vacuum environment or inert gas filled environment.

3.   The method of claim 1, wherein the step of nanoizing silicon materials is carried out by mechanical processing or mechanical ball milling.

4.   The method of claim 1, further comprising selecting the carbon materials from the group consisting of pitch, graphite, graphene, carbon black, carbon nanotubes, nanofibers.

5. The method of claim 1, further comprising selecting the pre-lithium nanomaterial from the group consisting of $Li_5B_4$, $Li_{22}Si_5$, $Li_{22}Sn_5$, $Li_{22}Ge_5$ , Li3N , $Li_2O$ , LiF , LiCl , LiI , $Li_2S$ , $Li_3PO_4$ , $LiAlO_2$ , $Li_2TiO_3$.

6. The method of claim 1, further comprising providing the pre-lithium nanomaterial having a first particle size which is smaller than a second particle size of the silicon-carbon composite.

7. The method of claim 1, further comprising controlling a mass ratio of the pre-lithium nanomaterial to the silicon-carbon composite in a range of 1 % to 5 %.

8. The method of claim 1, wherein the step of sintering the silicon-carbon pre-lithium composite precursor is carried out under a protective atmosphere or a low vacuum environment.

9. The method of claim 1, wherein the step of sintering the silicon-carbon pre-lithium composite precursor is carried out under a sintering temperature in a range of 500 Celsius degrees to 1200 Celsius degrees.

10. A silicon-carbon pre-lithium composite anode material comprises a silicon-carbon composite and a pre-lithium nanolayer covering the silicon-carbon composite, wherein the silicon-carbon composite is a composite structure formed by nano-silicon, polymer and carbon materials, and the pre-lithium nanolayer comprises one or more lithium-containing compound having a molecular format of LiyM, wherein M comprises a substance selected from the group consisting of B, Si, Ge, Sn, N, O, F, Cl, I, S, P, $AlO_2$, $TiO_2$.

11. The silicon-carbon pre-lithium composite anode material of claim 10, wherein the lithium-containing compound (LiyM) comprises a material selected from the group consisting of $Li_5B_4$, $Li_{22}Si_5$, $Li_{22}Sn_5$, $Li_{22}Ge_5$ , $Li_3N$ , $Li_2O$ , LiF , LiCl , LiI , $Li_2S$ , $Li_3PO_4$ , $LiAlO_2$ , $Li_2TiO_3$.

12. The silicon-carbon pre-lithium composite anode material of claim 10, wherein the pre-lithium nanolayer is a solid electrolyte interface film on a surface of the silicon-carbon composite, the polymer has a hydrophobic group and a hydrophilic group, the polymer is N-allyl-(2-ethylxanthate) propionamide (NAPA), or dimethylformamide (DMF), the carbon materials comprise a material selected from the group consisting of pitch, graphite, graphene, carbon black, carbon nanotubes, nanofibers.

13. A battery comprises a positive pole piece; a negative pole piece and a separator, wherein the negative pole piece comprises a silicon-carbon pre-lithium composite anode electrode material, the silicon-carbon pre-lithium composite anode electrode material comprises a silicon-carbon composite and a pre-lithium nanolayer covering the silicon-carbon composite, the silicon-carbon composite is a composite structure formed by nano-silicon, polymer and carbon materials, the pre-lithium nanolayer comprises one or more lithium-containing compound having a molecular format of LiyM, wherein M comprises a substance selected from the group consisting of B, Si, Ge, Sn, N, O, F, Cl, I, S, P, $AlO_2$, $TiO_2$.

14. The battery of claim 13, wherein the lithium-containing compound (LiyM) comprises a material selected from the group consisting of $Li_5B_4$, $Li_{22}Si_5$, $Li_{22}Sn_5$, $Li_{22}Ge_5$ , $Li_3N$ , $Li_2O$ , LiF , LiCl , LiI , $Li_2S$ , $Li_3PO_4$ , $LiAlO_2$ , $Li_2TiO_3$.

15. The battery of claim 13, wherein the pre-lithium nanolayer is a solid electrolyte interface film on a surface of the silicon-carbon composite.

FIG. 1

FIG.2

FIG.3

FIG.4

Europäisches
Patentamt

European
Patent Office

Office européen
des brevets

# EUROPEAN SEARCH REPORT

Application Number

EP 23 17 7304

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/233439 A1 (BTR NEW MAT GROUP CO LTD [CN]; DINGYUAN NEW ENERGY TECH CO LTD [CN]) 25 November 2021 (2021-11-25) <br> * examples 1,2 * <br> * Application content * | 1-10, 12-15 | INV. <br> H01M4/134 <br> H01M4/1395 <br> H01M4/36 <br> H01M4/38 <br> H01M10/0525 |
| X | US 2021/050597 A1 (LIN YEN-PO [TW] ET AL) 18 February 2021 (2021-02-18) <br> * paragraphs [0026], [0027], [0035] * <br> * example 4 * | 10-15 | H01M4/02 |
| A | CN 106 129 411 B (SHENZHEN BTR NEW ENERGY MAT INC) 24 January 2020 (2020-01-24) <br> * claim 1 * | 1-15 | |
| A | WANG ET AL: "Reversible high capacity nanocomposite anodes of Si/C/SWNTs for rechargeable Li-ion batteries", JOURNAL OF POWER SOURCES, ELSEVIER, AMSTERDAM, NL, vol. 172, no. 2, 28 September 2007 (2007-09-28), pages 650-658, XP022277392, ISSN: 0378-7753, DOI: 10.1016/J.JPOWSOUR.2007.05.025 * [2. Experimental] * | 1-15 | TECHNICAL FIELDS SEARCHED (IPC) <br><br> H01M |
| A | JP 2009 277485 A (TOYOTA MOTOR CORP) 26 November 2009 (2009-11-26) * the whole document * | 1-15 | |

The present search report has been drawn up for all claims

| Place of search | Date of completion of the search | Examiner |
|---|---|---|
| Munich | 18 October 2023 | Galbiati, Ivano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 7304

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2023

| Patent document cited in search report | | Publication date | Patent family member(s) | | Publication date |
|---|---|---|---|---|---|
| WO 2021233439 | A1 | 25-11-2021 | CN | 111584848 A | 25-08-2020 |
| | | | EP | 4044283 A1 | 17-08-2022 |
| | | | JP | 7323140 B2 | 08-08-2023 |
| | | | JP | 2022537501 A | 26-08-2022 |
| | | | KR | 20220002633 A | 06-01-2022 |
| | | | US | 2022376228 A1 | 24-11-2022 |
| | | | WO | 2021233439 A1 | 25-11-2021 |
| US 2021050597 | A1 | 18-02-2021 | NONE | | |
| CN 106129411 | B | 24-01-2020 | NONE | | |
| JP 2009277485 | A | 26-11-2009 | NONE | | |

EPO FORM P0459

For more details about this annex : see Official Journal of the European Patent Office, No. 12/82

**EP 4 293 745 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210690849